# FASCICULE DE BREVET EUROPEEN

(11) **EP 1 800 728 B1**
(45) Date de publication et mention de la délivrance du brevet: **27.07.2011**
(21) Numéro de dépôt: 06291875.0
(22) Date de dépôt: 01.12.2006
(51) Int. Cl.: B01D 45/12, B01J 8/00, C10G 11/18

(54) **Nouveau système de séparation gaz solide et de stripage pour les unités de craquage catalytique en lit fluidisé**
Neuartiges System zur Trennung von Gas und Feststoffen und zum Strippen für die Katkrackeinheiten in einem Wirbelbett
New system for gas-solid separation and for stripping for fluidised bed catalytic cracking units

(30) Priorité: 21.12.2005 FR 0513068
(43) Date de publication de la demande: 27.06.2007
(73) Titulaire: Institut Français du Pétrole, 92852 Rueil Malmaison Cedex (FR)
(72) Inventeur: Gauthier, Thierry, 69530 Brignais (FR); Le Coz, Jean-François, 92000 Nanterre (FR); Andreux, Régis, 69340 Francheville (FR)

(56) Documents cités:
- EP-A- 0 275 158
- EP-A1- 0 593 827
- EP-B1- 1 017 762
- US-A- 2 813 757
- US-A- 4 687 497
- US-A- 5 158 669

## Description

### Domaine de l'invention

L'invention concerne un dispositif de séparation et de stripage et son utilisation dans un procédé de craquage catalytique d'hydrocarbures en lit fluidisé, dont l'abréviation usuelle est FCC.

Les unités de craquage catalytique sont constituées d'une zone réactionnelle généralement de forme tubulaire, sensiblement verticale et allongée appelée "riser" si l'écoulement est ascendant et "dropper" si l'écoulement est descendant, dans laquelle le catalyseur est mis en contact avec une charge hydrocarbonée, puis séparé des effluents hydrocarbonés en un ou plusieurs étages de séparation, comportant au moins un étage de cyclones.

On appellera dans la suite du texte zone de séparation, le dispositif permettant la séparation primaire du catalyseur des effluents réactionnels situé en aval de la zone réactionnelle et en amont d'un ou de plusieurs étages de séparation ultérieurs, généralement réalisés au moyen d'étages de cyclones.

L'objectif de la zone de séparation du catalyseur et des effluents réactionnels est d'abaisser la concentration en particules solide dans les effluents gazeux, l'efficacité de séparation des particules étant généralement supérieure à 50% et variant souvent de 75% à 99%.

Le rapport des débits massiques solide sur gaz dans l'écoulement gaz solide en entrée de la zone de séparation est généralement compris entre 2 et 50, et préférentiellement compris entre 3 et 10.

La vitesse superficielle du gaz en sortie du riser (1) est généralement comprise entre 3 m/s et 30 m/s, et préférentiellement comprise entre 10 m/s et 25m/s.

L'invention concerne un dispositif de séparation et de stripage en tête des riser d'unité de FCC permettant à la fois un haut degré de séparation gaz solide, un préstripage de la fraction solide récupérée à l'issue de ladite séparation et, une intégration avec la zone de stripage proprement dite qui se traduit par une remarquable compacité.

Rappelons qu'il est essentiel dans les unités de FCC de réaliser un stripage efficace pour ne pas entraîner vers la régénération des hydrocarbures adsorbés à la surface du catalyseur qui, par leur combustion, entraîneraient un déséquilibre de la balance thermique de l'unité.

En outre, la séparation efficace du gaz, qui est évacué directement vers les zones de séparation aval, permet d'obtenir une meilleure sélectivité en produits valorisables en limitant la production de gaz secs (essentiellement méthane et éthane), généralement issus de la dégradation thermique des produits du craquage primaire.

Une séparation gaz solide efficace et rapide permet de stopper la réaction catalytique, ceci en minimisant le temps de séjour des produits de la réaction dans la zone de séparation, et en conservant la structure des rendements telle qu'elle est obtenue à la sortie du riser.

L'ensemble des zones de séparation et de stripage regroupé dans la présente invention en une zone unique dite de séparation/stripage est aussi compact que possible, et contribue donc ainsi à la qualité des rendements de l'unité.

### Examen de l'art antérieur

Un grand nombre de brevets décrivent des systèmes de séparation gaz/solide permettant de réduire le volume mort entre la zone de stripage et le ou les étages de cyclones, ces derniers étant souvent directement connectés au riser des unités de FCC.

Ainsi, la publication "FCC closed-cyclone system", d'A.A.Avidan, F.J.Krambeck, H.Owen et P.H.Schipper, parue dans Oil &Gas Journal, de mars 1990 et le brevet US 5055177 décrivent une séparation rapide au moyen de cyclones directement connectés au riser.

Dans ces systèmes, les cyclones connectés au riser sont maintenus à l'intérieur d'une enceinte de grande dimension qui englobe généralement également un deuxième étage de cyclones.

Le gaz séparé au premier étage rentre dans le deuxième étage de cyclones pour y subir un dépoussiérage plus poussé.

Le catalyseur est dirigé par l'intermédiaire des jambes de retour des cyclones vers la phase dense d'un lit fluidisé de stripage dans lequel de la vapeur est injectée à contre-courant du catalyseur pour désorber les hydrocarbures.

Les hydrocarbures issus du stripage sont ensuite évacués vers la phase diluée du réacteur et introduits dans le système de séparation au niveau du deuxième étage de cyclones.

Le fait d'avoir deux étages de cyclones, l'un connecté au riser effectuant la séparation primaire, le second connecté à la sortie gaz des cyclones du premier étage, nécessite d'avoir un diamètre très important pour l'enceinte englobant les deux étages de cyclones. Cette enceinte est parcourue à la fois par les gaz issus de la zone de stripage, et par les gaz entraînés par le catalyseur dans les jambes de retour du premier étage.

Les gaz issus de la zone de stripage sont donc exposés à une dégradation thermique, car le temps de contact des hydrocarbures strippés ou entraînés dans les jambes de retour avec le catalyseur sera, du fait du volume de l'enceinte englobant les étages de cyclones, de l'ordre de 20 secondes à plusieurs minutes.

La présente invention va supprimer cet inconvénient en faisant disparaître l'enceinte englobant les étages de cyclones. Les cyclones seront alors extérieurs à l'enceinte qui n'englobe que la zone de séparation primaire et de stripage, objet de la présente invention.

La séparation rapide peut également s'effectuer en une seule chambre à vorticité induite telle que décrite dans le brevet US 5,584,985. Cette technologie, couramment appelée en anglais " vortex séparation system" que l'on peut traduire par système de séparation par vortex, présente l'avantage de combiner simultanément la séparation et le stripage.

Dans le dispositif décrit dans le brevet cité, le solide est plaqué à la paroi sous l'effet de la force centrifuge et s'écoule vers le bas de la chambre où il est mis en contact avec un gaz de stripage qui est évacué avec les hydrocarbures désorbés vers le haut de la chambre de séparation.

Pour obtenir une bonne efficacité de séparation avec un tel système, il faut limiter la taille de la chambre de séparation afin que la force centrifuge s'exerçant sur les particules soit suffisamment élevée. Cela est incompatible avec une vitesse de remontée des gaz de stripage suffisamment faible pour limiter le réentraînement de particules descendant après leur séparation.

Le fait de combiner dans la même enceinte une séparation et un stripage ne permet généralement pas d'effectuer correctement ces deux opérations. De plus, et c'est un problème important de cette technologie, le catalyseur séparé du gaz s'écoule préférentiellement en paroi, et n'est donc pas mis facilement en contact avec le gaz de stripage qui se répartit sur toute la section de passage de la chambre.

Dans la présente invention, la zone de stripage est précédée d'une zone de préstripage faisant partie intégrante du système de séparation, et qui permet d'éviter la difficulté mentionnée.

Le brevet EP 1 017 762 B1 décrit un système de séparation et de stripage compact dans lequel des chambres de séparation et de circulation sont disposées de façon alternée autour du riser, l'ensemble de ces chambres étant contenu dans une enveloppe externe dont la partie inférieure correspond à la zone de stripage.

Dans la configuration décrite dans le brevet EP 1 017 762 B1, l'enveloppe externe peut ou non contenir un étage de cyclones.

Dans le cas où les cyclones sont externes à l'enveloppe externe, il peut se poser un problème de dilatation thermique entre l'enveloppe externe et le ou les étages de cyclones. Un joint d'expansion est alors positionné sur le conduit d'évacuation vers le séparateur secondaire.

Le dispositif de séparation et de stripage selon la présente invention permet d'éviter tout problème de dilatation thermique dans la mesure où, comme il sera expliqué en détail, les chambres de séparation et le riser forment un premier ensemble qui n'est plus solidaire des chambres de préstripage, et permet donc leur libre dilatation.

Selon le dispositif de séparation et de stripage de la présente invention, l'efficacité de séparation des particules est généralement supérieure à 50 %, et préférentiellement supérieure à 75%,

Le dispositif de séparation et de stripage selon la présente invention est par ailleurs dimensionné de manière à limiter le temps de séjour des gaz dans ledit dispositif à moins de 3 secondes dans les conditions d'opération.

### Description sommaire des figures

La figure 1 représente une vue prise au travers d'une chambre de préstripage du dispositif selon l'invention, positionnée en partie supérieure d'un riser de FCC. La figure 1 permet de visualiser la configuration d'une chambre de préstripage. Elle montre un système de séparation secondaire constitué d'un étage de cyclones, ce qui n'est nullement limitatif, l'invention étant compatible avec plusieurs étages de cyclones disposés en série.
La figure 2 représente une vue prise au travers d'une chambre de séparation du dispositif selon l'invention. Elle permet de visualiser la configuration d'une chambre de séparation. De la même manière, la figure 2 n'est nullement limitative en ce qui concerne le système de séparation secondaire, représenté ici par un étage de cyclones.
La figure 3 représente une variante du dispositif selon l'invention dans laquelle les jambes de retour des cyclones constituant le système de séparation secondaire pénètrent sur la majeure partie de leur longueur à l'intérieur de la zone de stripage.
La figure 4 est une vue de dessus du dispositif selon l'invention qui permet de visualiser la répartition en chapelle des chambres de séparation et des chambres de préstripage, ainsi que les parois séparant lesdites chambres.

### Description sommaire de l'invention

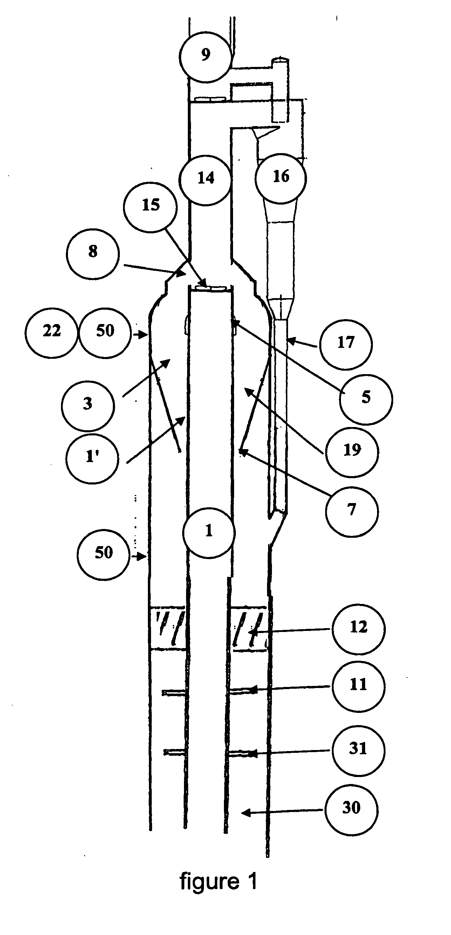

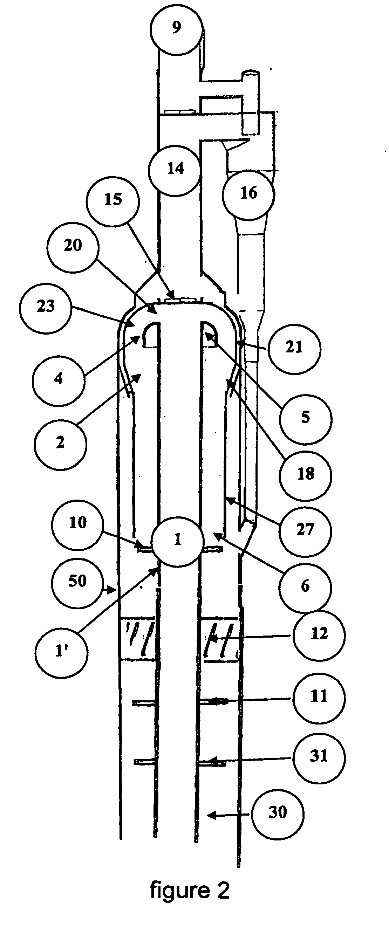

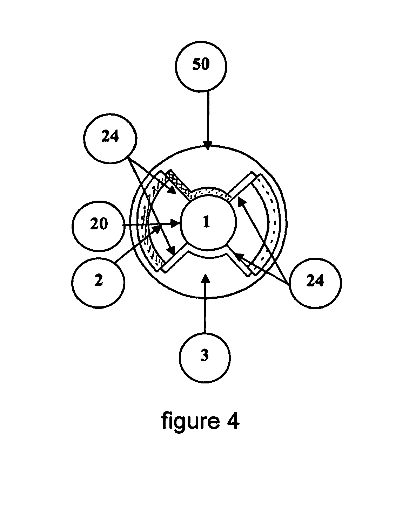

Les numérotations entre parenthèses dans le texte correspondent aux numérotations sur les figures 1 à 4.

Le dispositif de séparation et de stripage d'un mélange gazeux et d'un flux de particules solide selon la présente invention est de préférence applicable aux unités de craquage catalytique en lit fluidisé présentant un réacteur tubulaire central de forme sensiblement verticale et allongée appelé "riser" dans la terminologie anglo saxonne.

Il comprend une une enveloppe (50), divisée en une pluralité de chambres de séparation (2) et une pluralité de chambres de préstripage (3) réparties en chapelle et de manière alternée autour d'un réacteur central (1), de forme sensiblement verticale et allongée, fermé par une section supérieure (15), et dans lequel circule le mélange gazeux et le flux de particules à séparer,
- chaque chambre de séparation (2) comportant dans sa partie supérieure, une ouverture (20) d'entrée communiquant avec le réacteur (1), et avec une zone de centrifugation (23) permettant de séparer au moyen du déflecteur (4) les particules du mélange gazeux, la zone de centrifugation (23) étant définie pour la mise en rotation dans un plan vertical du mélange gazeux et des particules suivant un angle d'au plus 180 degrés, et
- chaque chambre de séparation (2) comportant une paroi externe (21-18-27), une paroi interne confondue avec la paroi externe du réacteur (1), et deux parois latérales sensiblement verticales (24) qui sont aussi les parois latérales des chambres de préstripage (3), au moins une des parois latérales (24) de chaque chambre de séparation (2) comportant une première communication latérale (5), située en dessous de l'ouverture (20) d'entrée, faisant communiquer le mélange gazeux avec la chambre de préstripage adjacente (3),
- chaque chambre de séparation (2) comportant en outre dans sa partie inférieure (27) une seconde ouverture (6) permettant une sortie sensiblement axiale des particules située en dessous de la première communication latérale (5) de sortie du mélange gazeux, la seconde ouverture (6) de sortie des particules communiquant en dessous des chambres de séparation (2) avec une zone de stripage (30) qui contient au moins un moyen de stripage principal (11),
- chaque chambre de préstripage (3) comportant une paroi externe (22) s'étendant au delà du secteur angulaire correspondant à la dite chambre de préstripage, et recouvrant la paroi externe (21-18-27) des chambres de séparation (2) de telle sorte que ladite paroi externe (22) est confondue avec l'enveloppe externe (50), et une paroi interne opposée à la paroi externe (22),
- chaque chambre de préstripage(3) comportant dans sa partie supérieure une ouverture (8) communiquant avec un conduit (14) d'évacuation situé sensiblement dans l'axe du réacteur (1) et au dessus de la section fermée (15) de ce dernier,
- chaque chambre de préstripage (3) comportant dans sa partie inférieure une ouverture (7) définie par la paroi externe (22), la paroi interne, et les parois latérales (24) et communiquant avec la zone de stripage (30), et
- chaque chambre de préstripage (3) comportant en plus des parois latérales (24) une portion verticale ou conique (19) fixée à la paroi externe (22) de l'enveloppe (50), la différence de dilatation thermique entre, d'une part le réacteur (1) et les chambres de séparation (2) formant un premier ensemble, et d'autre part les chambres de préstripage (3) formant un second ensemble, étant naturellement compensée par les interstices séparant les deux ensembles,
- l'enveloppe (50) comprenant en outre un conduit (14) d'évacuation du mélange contenant les effluents gazeux en provenance des chambres de préstripage (3), situé sensiblement dans l'axe du réacteur (1) et connecté d'une part auxdites chambres de préstripage (3) par les ouvertures supérieures (8), et à au moins un séparateur secondaire (16) permettant de séparer les particules solides contenues dans l'effluent gazeux en provenance du conduit d'évacuation (14), ledit séparateur secondaire (16) comprenant une sortie (9) d'effluents gazeux, et une sortie (17) de particules plongeant dans la zone de stripage (30), ladite zone de stripage (30) communiquant avec ladite conduite (14) d'évacuation du mélange gaz solide, via les ouvertures inférieures (7) des chambres de préstripage (3).

Dans une variante du dispositif selon l'invention, la dilatation thermique entre, d'une part le riser (1) et les chambres de séparation (2), et d'autre part les chambres de préstripage (3) est compensée par un joint de dilatation placé sur le riser (1), entre la côte inférieure du déflecteur (4) et la côte de l'ouverture inférieure (6) de la chambre de séparation (3).

De manière avantageuse, le dispositif de séparation et de stripage selon la présente invention est défini de manière que la somme des sections des communications latérale (5) des chambre de séparation (2) ait sensiblement la même valeur que la somme des sections des ouvertures (20), et simultanément, de manière que la somme des sections des ouvertures supérieures (8) des chambres de préstripage (3) ait sensiblement la même valeur que la somme des ouvertures (20).

Le dispositif de séparation et de stripage selon une variante de la présente invention possède dans chacune de ses chambres de séparation (2) un déflecteur (4) ayant une forme sensiblement parallèle à la paroi externe (21), et s'étendant verticalement au moins jusqu'à la cote du bord inférieur des communications latérales (5), et jusqu'à une cote correspondant sensiblement au plus grand diamètre de ladite paroi externe (21).

Le déflecteur (4) pourra épouser dans sa partie supérieure, la forme de la communication latérale (5) de la paroi (24), ou éventuellement s'en écarter, mais en lui restant sensiblement parallèle.

Le dispositif de séparation et de stripage selon la présente invention possède de façon avantageuse en outre des moyens de préstripage (10) qui sont disposés immédiatement en dessous des ouvertures (6) de sortie des particules des chambres de séparation (2).

Le dispositif de séparation et de stripage selon la présente invention possède une zone de stripage (30) comprenant de manière avantageuse, des moyens (12) pour uniformiser l'écoulement des particules situées dans la partie supérieure de ladite zone de stripage (30), et favoriser le contact entre lesdites particules et le gaz de stripage. Ces moyens (12) peuvent être des plaques inclinées disposées en chicanes, des garnissages structurés ou d'autres moyens dont une description non limitante peut être trouvée dans les brevets EP 2778869, US 2440620, US 2472502, US 2481439, US 6224833 ou EP 1124350 ou dans des livres tels que "matériel et équipement", tome 4 de l'encyclopédie le raffinage du pétrole, de P.Trambouze édité aux éditions Technip, 1999.

Le dispositif de séparation et de stripage selon la présente invention peut communiquer par l'intermédiaire d'un conduit (14) sensiblement vertical et situé dans l'axe du riser (1) avec au moins un système de séparation secondaire généralement constitué d'un étage de cyclones (16) muni de jambe de retour (17) extérieures ou intérieures à l'enveloppe (50), mais dont l'extrémité inférieure plonge dans la zone de stripage (30).

Le dispositif de séparation et de stripage selon l'invention peut comprendre des moyens pour uniformiser l'écoulement des particules situées dans la jambe de retour des solides (27) de la chambre de séparation (2), ces moyens pouvant être du même type ou d'un type analogue aux moyens (12) décrits ci-avant.

### Description détaillée de l'invention

L'invention concerne un dispositif de séparation et de stripage d'un mélange gazeux et d'un flux de particules issus d'une zone réactionnelle (1) cylindrique et allongée selon un axe sensiblement vertical, appelée riser (1) dans la suite du texte, comprenant une enveloppe externe (50), une pluralité de chambres de séparation (2) fixées au riser (1), et une pluralité de chambres de préstripage (3) fixées à l'enveloppe externe (50), lesdites chambres (2) et (3) étant réparties en chapelles et alternativement autour dudit riser central (1). Le riser présente une section fermée (15) qui est en continuité avec la partie supérieure des chambres de séparation (2) et des chambres de préstripage (3). De la sorte, l'intégralité de la suspension gaz solide est contrainte de passer dans les chambres de séparation par les ouvertures (20).

Les chambres d'un même type, séparation (2) ou préstripage (3), ont généralement la même dimension en particulier le même angle d'ouverture. Mais les chambres de séparation (2), et les chambres de pré stripage (3) peuvent avoir des angles d'ouverture différents.

Globalement, il existe une symétrie axiale des chambres autour de l'axe du riser (1), et le nombre de chambres de séparation peut atteindre et varie 8 préférentiellement entre 2 et 4.

De même, le nombre de chambres de préstripage peut atteindre 8 et varie préférentiellement entre 2 et 4.

Les chambres de séparation (2) et le riser (1) forment un ensemble solidaire délimité par 4 parois 1, 24, 21-18-27 et 24.

Les chambres de préstripage (3) sont délimitées par leur paroi externe (22) et la paroi externe du riser (1).

La géométrie des chambres de préstripage (3) est de préférence complétée par des portions coniques (19) fixées sur la paroi externe (22). De cette façon, les chambres de préstripage (3) ne sont pas physiquement liées au riser (1), et la différence de dilatation thermique entre d'une part le riser (1) et les chambres de séparation (2) formant un premier ensemble, et d'autre part les chambres de préstripage (3) formant un deuxième ensemble, est naturellement compensée par les interstices séparant les deux ensembles, ceci sans joint de dilatation selon un mode de réalisation préféré de l'invention.

Dans la suite de la présente description on présentera d'abord la géométrie des chambres de séparation (2), puis celle des chambres de préstripage (3).

Chaque chambre de séparation (2) comporte en sa partie supérieure, une ouverture (20) d'entrée communiquant avec le riser (1) et avec une zone de centrifugation (23) de façon à séparer par effet centrifuge les particules solides du mélange gazeux.

La zone de centrifugation (23) est située dans la partie supérieure de la chambre de séparation (2).

Elle est définie au moyen d'un déflecteur (4), permettant la mise en rotation dans un plan vertical du mélange gazeux et des particules issues du riser (1) suivant un angle d'au plus 180 degrés par rapport à la verticale. C'est à dire que les particules qui ont un mouvement sensiblement vertical et ascendant à l'entrée de la zone de centrifugation (23) se retrouvent en sortie de ladite zone avec un mouvement sensiblement vertical et descendant.

Le flux gazeux chargé en particules solides issu du riser (1) passe intégralement dans les chambres de séparation (2) par l'intermédiaire des ouvertures (20), car le riser présente une section fermée (15) située sensiblement au niveau ou au dessus de la partie supérieure des ouvertures (20).

Chaque chambre de séparation (2) comporte en outre deux parois latérales sensiblement verticales (24), qui sont aussi les parois latérales des chambres de préstripage (3) adjacentes à ladite chambre de séparation (2).

Au moins une des parois (24) verticales de chaque chambre (2) comporte une ouverture latérale (5), située en dessous de l'ouverture (20) d'entrée, faisant communiquer le mélange gazeux de la chambre de séparation (2) vers la chambre de préstripage adjacente (3).

Préférentiellement, chaque paroi verticale (24) disposera d'une ouverture latérale (5) permettant ainsi la communication de la chambre de séparation considérée (2) avec les deux chambres de préstripage (3) qui lui sont adjacentes. Dans la suite du texte, on appellera les ouvertures latérales (5) communications latérales.

Chaque chambre de séparation (2) comporte en plus des parois latérales (24), une paroi externe (21) se développant de préférence jusqu'à un diamètre maximum (Dmax), puis se prolongeant de préférence par une portion verticale ou conique (18) jusqu' à un diamètre Dmin inférieur ou égal à Dmax, puis se prolongeant éventuellement encore par une portion sensiblement verticale (27).

Selon un mode de réalisation préféré de l'invention, la portion verticale ou conique (18), et éventuellement la portion sensiblement verticale (27) des chambres de séparation (2) sont équipées de moyens favorisant l'uniformisation de l'écoulement gaz solide sur lesdites portions (18) et (27) ainsi que le contact gaz solide.

Ces moyens peuvent être des plaques inclinées disposées en chicanes, des garnissages structurés ou d'autres moyens dont une description non limitante peut être trouvée dans les brevets EP 2778869, US 2440620, US 2472502, US 2481439, US 6224833 ou EP 1124350 ou dans des livres tels que "matériel et équipement", tome 4 de l'encyclopédie le raffinage du pétrole, de P.Trambouze édité aux éditions Technip, 1999.

Tout élément permettant d'uniformiser l'écoulement gaz solide, et de favoriser le contact gaz solide peut être utilisé dans le cadre de la présente invention.

A l'opposé de cette paroi externe (21)-(18)-(27) formant un ensemble continu, se situe la paroi interne (1') de la chambre de séparation (2) qui se confond avec la paroi externe du riser (1).

Les parois verticales (24) sont rigidement liées à la paroi externe du riser (1).

La portion verticale (27) de la paroi externe définit en combinaison avec la paroi interne (1'), et les parois latérales (24) une seconde ouverture (6) située strictement au dessous du niveau des communications latérales (5), permettant une sortie sensiblement axiale des particules contenues dans la chambre de séparation (2).

Un déflecteur (4), de forme sensiblement parallèle à la paroi externe (21), et limité à une hauteur sensiblement égale à celle de la paroi externe (21), définit en combinaison avec la dite paroi (21), la zone de centrifugation (23).

De manière préférée, le déflecteur (4) épouse la forme des communications latérales (5) découpées sur les parois latérales (24), mais il peut s'en écarter plus ou moins en lui restant sensiblement parallèle.

Le bord inférieur du déflecteur (4) se situe préférentiellement à un niveau inférieur au bord inférieur des communications latérales (5).

La seconde ouverture (6) de sortie des particules communique avec une zone de stripage (30), de forme sensiblement cylindrique et entourant le riser (1).

Ladite zone de stripage (30) est commune à l'ensemble des chambres de séparation (2), et contient au moins un moyen de stripage principal (11), complété éventuellement par un moyen de stripage secondaire (31).

Chaque chambre de préstripage (3), possède une paroi externe (22) et une paroi interne opposée à la paroi externe (22), qui se confond avec la paroi externe du riser (1).

La paroi externe (22) s'étend au delà du secteur angulaire correspondant aux chambres de préstripage (3) et recouvre la paroi externe 21-18-27 des chambres de séparation (2), de telle sorte que la paroi externe (22) est confondue avec l'enveloppe externe (50).

Chaque chambre de préstripage (3) comporte dans sa partie supérieure une ouverture (8) communiquant avec un conduit (14) d'évacuation situé sensiblement dans l'axe du riser (1) et au dessus du niveau de la section fermée (15) de ce dernier.

Le conduit (14) permet l'évacuation du mélange contenant les effluents gazeux encore chargée en une mineure partie de particules vers un séparateur secondaire (16). Généralement le séparateur secondaire (16) sera constitué d'au moins un étage de cyclones externes à l'enveloppe (50).

La paroi externe (22) est solidaire du conduit d'évacuation (14) et du ou des étages de cyclones connectés au conduit d'évacuation (14).

Chaque chambre de préstripage (3) comporte en outre dans sa partie inférieure une ouverture (7) définie par la paroi externe (22), la paroi interne (1'), et les parois latérales (24), et communiquant avec la zone de stripage (30).

Chaque chambre de préstripage (3) comporte en plus des parois latérales (24), une portion verticale ou conique (19) s'étendant jusqu'à un diamètre Dmin inférieur ou égal à Dmax.

Généralement, les parois verticales ou obliques (19) des chambres de préstripage (3) sont fixées à la paroi externe (22), ce qui évite tout problème de dilatation différentielle entre d'une part le riser (1) et les chambres de séparation (2), et d'autre part lesdites chambres de préstripage (3).

Néanmoins, dans une variante de l'invention, les parois obliques (19) des chambres de préstripage (3) peuvent être fixées aux parois latérales (24) et à la paroi externe (22) qui se différencie alors de la paroi 50.

Dans ce cas, la différence de dilatation thermique entre, d'une part le riser (1) et les chambres de séparation (2), et d'autre part les chambres de préstripage (3) est compensée par un joint de dilatation placé sur le riser (1), préférentiellement entre la côte inférieure du déflecteur (4) et la côte de l'ouverture inférieure (6) de la chambre de séparation (3).

Le séparateur secondaire (16), généralement constitué d'au moins un étage de cyclones en parallèle, permet de séparer les particules contenues dans l'effluent gazeux en provenance du conduit d'évacuation (14), ledit séparateur secondaire comprenant une sortie (9) des effluents gazeux, et une sortie (17) de particules, généralement appelée jambe de retour, plongeant dans la zone de stripage (30).

La sortie des effluents gazeux (9) communique éventuellement avec un second étage de cyclones non représenté sur les figure (1),(2),(3).

Selon une variante de l'invention, les sorties de particules (17) sont extérieures à la zone de stripage (30) et ne pénètrent à l'intérieur de ladite zone (30) qu'au niveau de leur extrémité inférieure.

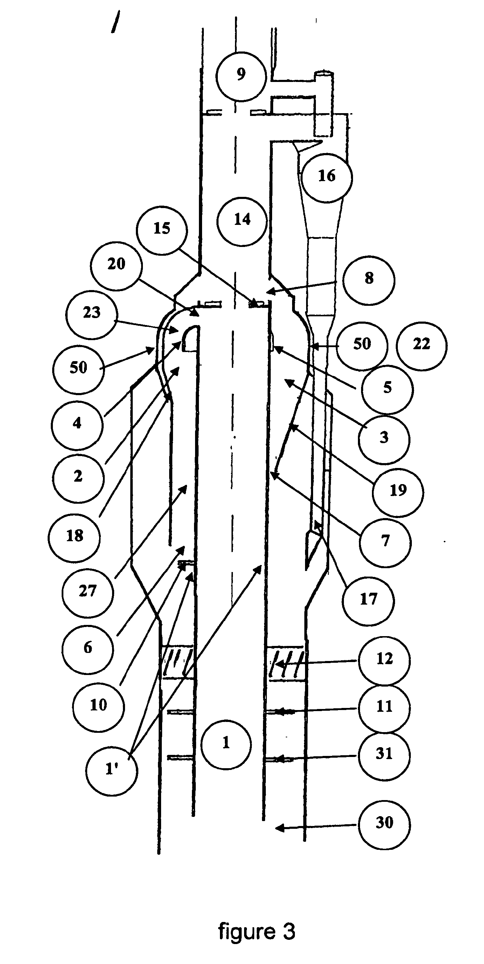

Selon une autre variante de l'invention représentée par la figure 3, les sorties de particules (17) pénètrent sur la majeure partie de leur longueur à l'intérieur de l'enveloppe externe (50).

L'enveloppe externe de la zone de stripage (30) constitue le prolongement de l'enveloppe externe (50).

Des moyens de stripage additionnels (10) peuvent être disposés directement en dessous des ouvertures de sortie des particules des chambres de séparation (2) pour compléter les moyens de stripage (11) et (31) de la zone de stripage (30).

Les effluents de stripage obtenus sont alors évacués vers le haut par les chambres de préstripage (3) après avoir traversé leur ouverture inférieure (8), puis traités dans le séparateur secondaire (16).

Le dispositif de séparation et de stripage selon l'invention peut fonctionner de manière optimale en respectant les vitesses de passage suivantes:
- Vitesse gaz en tête de riser (1) de 5 m/s à 35 m/s, préférentiellement de 10 m/s à 25 m/s
- Vitesse gaz dans l'ouverture (20): de 5 m/s à 35 m/s, préférentiellement de 10 m/s à 25 m/s
- Vitesse gaz dans l'ouverture (5): de 5 m/s à 35 m/s, préférentiellement de 10 m/s à 25 m/s
- Vitesse gaz dans l'ouverture (7): de 0,3 m/s à 5 m/s, préférentiellement de 1 m/s à 3 m/s
- Flux de catalyseur dans l'ouverture (6) compris entre 10 et 300 kg/(m².s), préférentiellement de 50 à 200 kg/(m².s), avec des particules caractérisées par une masse volumique de grain comprise entre 1000 et 2000 kg/m3, et un diamètre moyen dit de "Sauter" compris entre 40 et 100 microns.

L'invention peut fonctionner suivant deux modes différents :
1) Le niveau des particules formant un lit fluidisé (de masse volumique moyenne comprise entre 200 et 800 kg/m3, préférentiellement 500 à 750 kg/m3 dans la zone de stripage (30) est significativement inférieur au niveau de l'ouverture (6) de sortie des particules des chambres de séparation (2).
   Environ 30 % à 50 % du gaz et 95 % à 99 % des particules issues du riser (1) passent dans la portion verticale ou conique (18) des chambres de séparation (2), le reste passant dans les chambres de préstripage (3) à travers les communications latérales (5).
   Les chambres de préstripage (3) récupèrent par l'ouverture (5) les gaz de stripage issus de la zone de stripage (30) et par l'ouverture (7) les 30 à 50% de gaz issus de l'ouverture de sortie (6) évacués avec les particules des chambres de séparation (2), et les orientent vers le séparateur secondaire (16).
2) Le niveau des particules dans la zone de stripage (30) est significativement supérieur au niveau de l'ouverture (6) des sorties des particules de chambres de séparation (2).

Environ 0 à 5 % du gaz et 50 à 95 % des particules issues du riser (1) passent dans la portion verticale ou conique (18) des chambres de séparation (2), le reste passant dans les chambres de préstripage (3) à travers les communications latérales (5).

Les chambres de préstripage (3) récupèrent les gaz de stripage issus de la zone de stripage (30) et les orientent vers le séparateur secondaire (16).

Le deuxième mode est le mode préféré aux conditions de fonctionnement normal.

Le premier mode est le mode préféré aux conditions de fonctionnement transitoire (démarrage et arrêt).

### Exemple

Dans le présent exemple on compare, toute chose égale par ailleurs, un système de séparation selon l'art antérieur avec un système de séparation selon la présente invention.

La comparaison porte sur l'effet de compacité apporté par le dispositif selon l'invention.

Soit une unité de craquage catalytique d'hydrocarbure traitant un débit d'hydrocarbures de 16000 BPSD.

Le débit de catalyseur sous forme de particules solides est de 600 tonnes/heure.

Le diamètre externe du riser est de 1300mm
- Selon l'art antérieur, la zone de stripage entourant un séparateur classique en tête de riser, le séparateur secondaire, et les moyens de stripage primaires et secondaire a les dimensions suivantes :
   - Hauteur : 23 mètres.
   - Diamètre maximum : 6,25 mètres.
- Selon l'invention l'enveloppe (30) conforme à la figure 1 a les dimensions suivantes:
   - Hauteur : 17 mètres.
   - Diamètre maximum : 3,5 mètres.

Les autres dimensions principales du dispositif sont les suivantes:
- diamètre de la zone de stripage (30): 3,5 mètres
- distance séparant les parois latérales d'une chambre de séparation(2) de la paroi du riser (1): 0,8 m
- Largeur des communications latérales (5):0,3 mètres
- hauteur des communications latérales (5):0,5 mètres
- hauteur de la jambe de retour du séparateur secondaire externe: 7 mètres

La masse de l'unité reposant sur le sol diminue de 70 tonnes par rapport au dispositif de l'art antérieur.

## Revendications

1. Dispositif de séparation et de stripage d'un mélange gazeux et d'un flux de particules, comprenant une enveloppe (50), divisée en une pluralité de chambres de séparation (2) et une pluralité de chambres de préstripage (3) réparties en chapelle et de manière alternée autour d'un réacteur central (1), de forme sensiblement verticale et allongée, fermé par une section supérieure (15), et dans lequel circule le mélange gazeux et le flux de particules à séparer,
- chaque chambre de séparation (2) comportant dans sa partie supérieure, une ouverture (20) d'entrée communiquant avec le réacteur (1), et avec une zone de centrifugation (23) permettant de séparer au moyen du déflecteur (4) les particules du mélange gazeux, la zone de centrifugation (23) étant définie pour la mise en rotation dans un plan vertical du mélange gazeux et des particules suivant un angle d'au plus 180 degrés, et
- chaque chambre de séparation (2) comportant une paroi externe (21-18-27), une paroi interne confondue avec la paroi externe du réacteur (1), et deux parois latérales sensiblement verticales (24) qui sont aussi les parois latérales des chambres de préstripage (3), au moins une des parois latérales (24) de chaque chambre de séparation (2) comportant une première communication latérale (5), située en dessous de l'ouverture (20) d'entrée, faisant communiquer le mélange gazeux avec la chambre de préstripage adjacente (3),
- chaque chambre de séparation (2) comportant en outre dans sa partie inférieure (27) une seconde ouverture (6) permettant une sortie sensiblement axiale des particules située en dessous de la première communication latérale (5) de sortie du mélange gazeux, la seconde ouverture (6) de sortie des particules communiquant en dessous des chambres de séparation (2) avec une zone de stripage (30) qui contient au moins un moyen de stripage principal (11),
- chaque chambre de préstripage (3) comportant une paroi externe (22) s'étendant au delà du secteur angulaire correspondant à la dite chambre de préstripage, et recouvrant la paroi externe (21-18-27) des chambres de séparation (2) de telle sorte que ladite paroi externe (22) est confondue avec l'enveloppe externe (50), et une paroi interne opposée à la paroi externe (22),
- chaque chambre de préstripage(3) comportant dans sa partie supérieure une ouverture (8) communiquant avec un conduit (14) d'évacuation situé sensiblement dans l'axe du réacteur (1) et au dessus de la section fermée (15) de ce dernier,
- chaque chambre de préstripage (3) comportant dans sa partie inférieure une ouverture (7) définie par la paroi externe (22), la paroi interne, les parois latérales (24) et communiquant avec la zone de stripage (30), et
- chaque chambre de préstripage (3) comportant en plus des parois latérales (24) une portion verticale ou conique (19) fixée à la paroi externe (22) de l'enveloppe (50), la différence de dilatation thermique entre, d'une part le réacteur (1) et les chambres de séparation (2) formant un premier ensemble, et d'autre part les chambres de préstripage (3) formant un second ensemble, étant naturellement compensée par les interstices séparant les deux ensembles,
- l'enveloppe (50) comprenant en outre un conduit (14) d'évacuation du mélange contenant les effluents gazeux en provenance des chambres de préstripage (3), situé sensiblement dans l'axe du réacteur (1) et connecté d'une part auxdites chambres de préstripage (3) par les ouvertures supérieures (8), et à au moins un séparateur secondaire (16) permettant de séparer les particules solides contenues dans l'effluent gazeux en provenance du conduit d'évacuation (14), ledit séparateur secondaire (16) comprenant une sortie (9) d'effluents gazeux, et une sortie (17) de particules plongeant dans la zone de stripage (30), ladite zone de stripage (30) communiquant avec ladite conduite (14) d'évacuation du mélange gaz solide, via les ouvertures inférieures (7) des chambres de préstripage (3).

2. Dispositif selon la revendication 1, dans lequel la somme des sections des communications latérale (5) des chambres de séparation (2) a sensiblement la même valeur que la somme des sections des ouvertures (20).

3. Dispositif selon l'une quelconque des revendication 1 à 2 dans lequel la somme des sections des ouvertures supérieures (8) des chambres de préstripage (3) a sensiblement la même valeur que la somme des ouvertures (20).

4. Dispositif selon l'une des revendications 1 et 3, dans lequel le déflecteur (4) a une forme sensiblement parallèle à la paroi externe (21), et s'étend verticalement au moins jusqu'à la côte du bord inférieur des communications latérales (5) et jusqu'à une côte correspondant sensiblement au plus grand diamètre de ladite paroi externe (21).

5. Dispositif selon la revendication 4, dans lequel le déflecteur (4) épouse dans sa partie supérieure, la forme de la communication latérale (5) de la paroi (24).

6. Dispositif selon l'une quelconque des revendications 1 à 5, dans lequel des moyens de préstripage (10) sont disposés immédiatement en dessous des ouvertures (6) de sortie des particules des chambres de séparation (2).

7. Dispositif selon l'une des quelconque des revendications 1 à 6, dans lequel la zone de stripage (30) comprend des moyens (12) pour uniformiser l'écoulement des particules situées dans la partie supérieure de ladite zone de stripage (30).

8. Dispositif selon l'une quelconque des revendications 1 à 7, dans lequel la jambe de retour des solides (27) de la chambre de séparation (2) comprend des moyens du même type, ou d'un type analogue, aux moyens (12), pour uniformiser l'écoulement des particules situées dans ladite jambe de retour (27).

9. Dispositif selon l'une quelconque des revendications 1 à 8, dans lequel les parois obliques (19) des chambres de préstripage (3) sont fixées aux parois latérales (24) et à la paroi externe (22), la dilatation thermique entre, d'une part le réacteur (1) et les chambres de séparation (2), et d'autre part les chambres de préstripage (3) est compensée par un joint de dilatation placé sur le riser (1), entre la côte inférieure du déflecteur (4) et la côte de l'ouverture inférieure (6) de la chambre de séparation (3).

10. Dispositif de séparation et de stripage selon l'une quelconque des revendications 1 à 9, dans lequel le nombre de chambres de séparation est compris entre 2 et 4.

11. Dispositif de séparation et de stripage selon l'une quelconque des revendications 1 à 10, dans lequel le nombre de chambres de préstripage est compris entre 2 et 4.

12. Procédé de craquage catalytique d'hydrocarbures en lit fluidisé mettant en oeuvre le dispositif selon l'une quelconque des revendications 1 à 11.

13. Procédé selon la revendication 12 dans lequel la vitesse du gaz en tête de riser (1) est comprise entre 5 m/s et 35 m/s.

14. Procédé selon l'une quelconque des revendications 12 à 13, dans lequel la vitesse du gaz dans l'ouverture d'entrée (20) est comprise entre 5 m/s et 35 m/s.

15. Procédé selon l'une quelconque des revendications 12 à 14, dans lequel la vitesse du gaz dans la communication (5) est comprise entre 5 m/s et 35 m/s.

16. Procédé selon l'une quelconque des revendications 12 à 15, dans lequel la vitesse du gaz dans l'ouverture (7) est comprise entre 0,3 et 5 m/s.

17. Procédé selon l'une quelconque des revendications 12 à 16, dans lequel le flux de catalyseur dans l'ouverture (6) est compris entre 10 et 300 kg/(m².s), avec des particules **caractérisées par** une masse volumique de grain comprise entre 1000 et 2000 kg/m3, et un diamètre moyen dit de "Sauter" compris entre 40 et 100 microns.

## Claims

1. Device for separating and stripping a gaseous mixture and a particle flow, comprising a jacket (50), divided into a number of separation chambers (2) and a number of pre-stripping chambers (3) that are distributed as in a chapel and in an alternating fashion around a central reactor (1), which has an essentially vertical and elongated shape, closed by an upper section (15), and in which the gaseous mixture and the flow of particles to be separated circulates,
- Each separation chamber (2), comprising in its upper portion an inlet opening (20) that communicates with the reactor (1) and with a centrifuging zone (23) that makes it possible to separate the particles of the gaseous mixture by means of the deflector (4), whereby the centrifuging zone (23) is defined for rotation in an essentially vertical plane of the gaseous mixture and particles according to an angle of at most 180 degrees, and
- Each separation chamber (2) comprising an outside wall (21-18-27), an inside wall that is merged with the outside wall of reactor (1), and two essentially vertical lateral walls (24) that are also the lateral walls of the pre-stripping chambers (3), at least one of the lateral walls (24) of each separation chamber (2) comprising a first lateral communication (5), located below the inlet opening (20) and bringing the gaseous mixture to the adjacent pre-stripping chamber (3),
- Each separation chamber (2) also comprising, in its lower portion (27), a second opening (6) that makes possible an essentially axial particle outlet located below the first lateral communication (5) of the outlet of the gaseous mixture, the second particle outlet opening (6) communicating below separation chambers (2) with a stripping zone (30) that contains at least one primary stripping means (11),
- Each pre-stripping chamber (3) having an external wall (22) laying over the angular portion corresponding to the so called pre-stripping chamber (3) and recovering the external wall (21-18-27) of the separation chamber (2) in such a way that the so called external wall (22) is merged with the external jacket (50), and an internal wall in opposition with the external wall (22),
- Each pre-stripping chamber (3) having at its upper portion an opening (8) communicating with an exit conduct (14) approximately located in the axis of the reactor (1) and above the closed section (15) of the reactor (1),
- Each pre-stripping chamber (3) having in its lower portion an opening (7) defined by the external wall (22), the internal wall, and the lateral walls (24) and communicating with the stripping zone (30), and
- Each pre-stripping chamber (3) having in addition to the lateral walls (24), a conical or vertical portion (19) fixed to the outside wall (22) of the jacket (50), the difference of thermal expansion between, on the one hand, the reactor (1) and the separation chambers (2) forming a first assembly, and, on the other hand, the pre-stripping chambers (3) forming a second assembly, naturally being compensated for by the gaps that separate the two assemblies,
- The jacket (50) also comprising a pipe (14) for evacuating the mixture that contains the gaseous effluents that are obtained from pre-stripping chambers (3), located essentially in the shaft of the reactor (1) and connected, on the one hand, to said pre-stripping chambers (3) by the upper openings (8) and to at least one secondary separator (16) making it possible to separate the solid particles that are contained in the gaseous effluent from the evacuation pipe (14), whereby said secondary separator (16) comprises an outlet (9) of gaseous effluents, and a particle outlet (17) that dips into the stripping zone (30), said stripping zone (30) communicating with said pipe (14) for evacuation of the gas-solid mixture, via the lower openings (7) of the pre-stripping chambers (3),
- Each pre-stripping chamber (3) having oblique walls (19) fixed to lateral walls (24) and to the outside wall (22) of the jacket (50), the difference of thermal expansion between, on the one hand, the riser (1) and the separation chambers (2) forming a first assembly, and, on the other hand, the pre-stripping chambers (3) forming a second assembly, naturally being compensated for by the gaps that separate the two assemblies.

2. Device according to claim 1, in which the sum of the sections of the lateral communications (5) of the separation chambers (2) has essentially the same value as the sum of the sections of the openings (20).

3. Device according to any of claims 1 to 2, in which the sum of the sections of the upper openings (8) of the pre-stripping chambers (3) has essentially the same value as the sum of the openings (20).

4. Device according to one of claims 1 and 3, in which the deflector (4) has a shape that is essentially parallel to the outside wall (21) and extends vertically at least up to the side of the lower edge of the lateral communications (5) and up to a side corresponding essentially to the largest diameter of said outside wall (21),

5. Device according to claim 4, in which the deflector (4), in its upper portion, conforms to the shape of the lateral communication (5) of the wall (24).

6. Device according to any of claims 1 to 5, in which the pre-stripping means (10) are placed immediately below outlet openings (6) of the particles of separation chambers (2).

7. Device according to any of claims 1 to 6, in which the stripping zone (30) comprises means (12) for standardizing the flow of particles located in the upper portion of said stripping zone (30).

8. Device according to any of claims 1 to 7, in which the return leg of the solids (27) of the separation chamber (2) comprises means of the same type, or of a type analogous to means (12) for standardizing the flow of the particles located in said return leg (27).

9. Device according to any of claims 1 to 8, in which the oblic walls (19) of the pre-stripping chambers (3) are fixed to the lateral walls (24) and at the external wall (22), the thermal expansion between, on the one hand, the riser (1) and the separation chambers (2), and, on the other hand, the pre-stripping chambers (3) is compensated for by an expansion joint that is placed on the riser (1) between the lower side of the deflector (4) and the side of the lower opening (6) of the separation chamber (3).

10. Device for separation and stripping according to any of claims 1 to 9, in which the number of separation chambers (2) is between 2 and 4.

11. Device for separation and stripping according to any of claims 1 to 10, in which the number of pre-stripping chambers (3) is between 2 and 4.

12. Process for fluidized-bed catalytic cracking of hydrocarbons, using the device according to any of claims 1 to 11.

13. Process according to claim 12, in which the velocity of the gas at the top of riser (1) is between 5 m/s and 35 m/s.

14. Process according to any of claims 12 or 13, in which the velocity of the gas in the inlet opening (20) is between 5 m/s and 35 m/s.

15. Process according to any of claims 12 to 14, in which the velocity of the gas in the communication (5) is between 5 m/s and 35 m/s.

16. Process according to any of claims 12 to 15, in which the velocity of the gas in the opening (7) is between 0.3 and 5 m/s.

17. Process according to any of claims 12 to 16, in which the flow of the catalyst in the opening (6) is between 10 and 300 kg/(m².s), with particles that are **characterized by** a grain density of between 1000 and 2000 kg/m3, and a so-called "Sauter" mean diameter of between 40 and 100 microns.

## Patentansprüche

1. Vorrichtung zum Trennen und Strippen eines Gasgemischs und eines Partikelflusses, umfassend einen Mantel (50), der in eine Vielzahl von Trennräumen (2) und in eine Vielzahl von Vorstrippräumen (3) unterteilt ist, die in einer Kuppel und auf alternierende Weise um einen zentralen Reaktor (1) herum verteilt sind, der eine im Wesentlichen vertikale und langgestreckte Form aufweist, von einem oberen Abschnitt (15) verschlossen wird und in welchem das Gasgemisch und der zu trennende Partikelstrom umläuft,
- wobei jeder Trennraum (2) in seinem Oberteil eine Eintrittsöffnung (20) aufweist, die mit dem Reaktor (1) in Verbindung steht, und mit einer Zentrifugationszone (23), die es erlaubt, die Partikel mithilfe des Deflektors (4) vom Gasgemisch zu trennen, wobei die Zentrifugationszone (23) definiert ist, um des Gasgemisch und die Partikel in einer vertikalen Ebene in einem Winkel von höchstens 180 Grad in Rotation zu versetzen, und
- wobei jeder Trennraum (2) eine Außenwand (21-18-27), eine Innenwand, die mit der Außenwand des Reaktors (1) identisch ist, und zwei im wesentlichen vertikale Seitenwände (24) umfasst, die auch die Seitenwände der Vorstrippräume (3) sind, wobei mindestens eine der Seitenwände (24) jedes Trennraums (2) eine erste seitliche Verbindung (5) aufweist, die unter der Eintrittsöffnung (20) liegt und das Gasgemisch mit dem benachbarten Vorstrippraum (3) in Verbindung setzt,
- wobei jeder Trennraum (2) außerdem in seinem Unterteil (27) eine zweite Öffnung (6) aufweist, die einen im Wesentlichen axialen Austritt der Partikel erlaubt, der unter der ersten seitlichen Verbindung (5) für den Austritt des Gasgemischs liegt, wobei die zweite Öffnung (6) für den Partikelaustritt unter den Trennräumen (2) mit einer Strippzone (30) in Verbindung steht, die mindestens ein Hauptstrippmittel (11) enthält.
- wobei jeder Vorstrippraum (3) eine Außenwand (22) umfasst, die sich über den Kreissektor hinaus erstreckt, der diesem Vorstrippraum entspricht, und die Außenwand (21-18-27) der Trennräume (2) derart überlappt, dass diese Außenwand (22) mit dem Außenmantel (50) identisch ist, und eine Innenwand, die der Außenwand (22) gegenüberliegt,
- wobei jeder Vorstrippraum (3) in seinem Oberteil eine Öffnung (8) aufweist, die mit einer Abzugsleitung (14) in Verbindung steht, die im Wesentlichen in der Achse des Reaktors (1) und über dem geschlossenen Abschnitt (15) dieses Letzteren liegt,
- wobei jeder Vorstrippraum (3) in seinem Unterteil eine Öffnung (7) aufweist, die die durch die Außenwand (22), die Innenwand und die Außenwände (24) definiert wird und mit der Strippzone (30) in Verbindung steht, und
- wobei jeder Vorstrippraum (3) zusätzlich zu den Seitenwänden (24) einen vertikalen oder konischen Abschnitt (19) aufweist, der an der Außenwand (22) des Mantels (50) befestigt ist, wobei die Wärmeausdehnungsdifferenz zwischen dem Reaktor (1) und den Trennräumen (2) einerseits, die eine erste Einheit formen, und den Vorstrippräumen (3) andrerseits, die eine zweite Einheit formen, auf natürliche Weise durch die Zwischenräume ausgeglichen werden, die beide Einheiten trennen,
- wobei der Mantel (50) außerdem eine Abzugsleitung (14) für das Gemisch umfasst, das die von den Vorstrippräumen (3) kommenden gasförmigen Abprodukte enthält, die im Wesentlichen in der Achse des Reaktors (1) liegt und einerseits durch die oberen Öffnungen (8) mit diesen Vorstrippräumen (3) und mit mindestens einem Sekundärseparator (16) verbunden ist, der es erlaubt, die festen Partikel zu trennen, die im aus der Abzugsleitung (14) kommenden gasförmigen Abprodukt enthalten sind, wobei dieser Sekundärseparator (16) einen Austritt (9) für gasförmige Abprodukte und einen Austritt (17) für Partikel aufweist, der in die Strippzone (30) eintaucht, wobei diese Strippzone (30) über die unteren Öffnungen (7) der Vorstrippräume (3) mit der Abzugsleitung (14) für das Gasgemisch mit festen Partikeln in Verbindung steht.

2. Vorrichtung nach Anspruch 1, wobei die Summe der Querschnitte der seitlichen Verbindungen (5) der Trennräume (2) im Wesentlichen den gleichen Wert hat wie die Summe der Querschnitte der Öffnungen (20).

3. Vorrichtung nach einem der Ansprüche 1 bis 2, wobei die Summe der Querschnitte der oberen Öffnungen (8) der Vorstrippräume (3) im Wesentlichen den gleichen Wert hat wie die Summe der Querschnitte der Öffnungen (20).

4. Vorrichtung nach einem der Ansprüche 1 bis 3, wobei der Deflektor (4) eine Form hat, die im Wesentlichen parallel zur Außenwand (21) ist, und sich vertikal mindestens bis zur Höhe der Unterkante der seitlichen Verbindungen (5) und bis zur Höhe erstreckt, die im Wesentlichen dem größten Durchmesser dieser Außenwand (21) entspricht.

5. Vorrichtung nach Anspruch 4, wobei der Deflektor (4) in seinem oberen Abschnitt die Form der seitlichen Verbindung (5) der Wand (24) annimmt.

6. Vorrichtung nach einem der Ansprüche 1 bis 5, wobei die Vorstrippmittel (10) direkt unter den Austrittsöffnungen (6) der Partikel aus den Trennräumen (2) angeordnet sind.

7. Vorrichtung nach einem der Ansprüche 1 bis 6, wobei die Strippzone (30) Mittel (12) umfasst, um die Strömung der Partikel im Oberteil dieser Strippzone (30) zu vereinheitlichen.

8. Vorrichtung nach einem der Ansprüche 1 bis 7, wobei die Rückführsäule (27) für die Feststoffe aus dem Trennraum (2) Mittel gleichen Typs oder eines entsprechenden Typs wie die Mittel (12) umfasst, um die Strömung der Partikel in dieser Rückführsäule (27) zu vereinheitlichen.

9. Vorrichtung nach einem der Ansprüche 1 bis 8, wobei die schrägen Wände (19) der Vorstrippräume (3) an den Seitenwänden (24) und an der Außenwand (22) befestigt sind, wobei die Wärmeausdehnung zwischen dem Reaktor (1) und den Trennräumen (2) einerseits und den Vorstrippräumen (3) andrerseits durch eine Dehnungsfuge ausgeglichen wird, die zwischen der Höhe der Unterkante des Deflektors (4) und der Höhe der unteren Öffnung (6) des Trennraums (3) auf dem Riser (1) angeordnet ist.

10. Vorrichtung nach einem der Ansprüche 1 bis 9, wobei die Zahl der Trennräume zwischen 2 und 4 beträgt.

11. Vorrichtung nach einem der Ansprüche 1 bis 10, wobei die Zahl der Vorstrippräume zwischen 2 und 4 beträgt.

12. Verfahren zum katalytischen Fließbettcracken von Kohlenwasserstoffen, das die Vorrichtung nach einem der Ansprüche 1 bis 11 verwendet.

13. Verfahren nach Anspruch 12, wobei die Geschwindigkeit des Gases im Kopf des Risers (1) zwischen 5 m/s und 35 m/s beträgt.

14. Verfahren nach einem der Ansprüche 12 bis 13, wobei die Geschwindigkeit des Gases in der Eintrittsöffnung (20) zwischen 5 m/s und 35 m/s beträgt.

15. Verfahren nach einem der Ansprüche 12 bis 14, wobei die Geschwindigkeit des Gases in der Verbindung (5) zwischen 5 m/s und 35 m/s beträgt.

16. Verfahren nach einem der Ansprüche 12 bis 15, wobei die Geschwindigkeit des Gases in der Öffnung (7) zwischen 0,3 m/s und 5 m/s beträgt.

17. Verfahren nach einem der Ansprüche 12 bis 16, wobei der Katalysatorstrom in der Öffnung (6) zwischen 10 und 300 kg/(m².s) beträgt, mit Partikeln, die durch eine Korndichte zwischen 1000 und 2000 kg/m3 und einem sogenannten mittleren Sauterdurchmesser zwischen 40 und 100 Mikron **gekennzeichnet** sind.
